# EUROPEAN PATENT APPLICATION

(11) **EP 4 647 632 A1**
(43) Date of publication of application: **12.11.2025**
(21) Application number: 25173043.8
(22) Date of filing: 28.04.2025
(51) Int. Cl.: F16H 15/20

(54) **SPEED VARIATOR AND GEAR CHANGE METHOD EXECUTED BY MEANS OF SAID SPEED VARIATOR**

(30) Priority: 06.05.2024 IT 202400010135
(71) Applicant: Mingardo, Leopoldo, 35043 Monselice (PD) (IT)
(72) Inventor: Mingardo, Leopoldo, 35043 Monselice (PD) (IT)
(74) Representative: Gallo, Luca

(57) **Abstract**

Speed variator (1) comprising a drive member (2), which is provided with a first frustoconical lateral surface (5) having a first axis (X) and a plurality of first holes (6) distributed around the first axis (X) along multiple first circumferences (7), and a driven member (8), which is provided with a second cylindrical lateral surface (9) having a second axis (Y) parallel to an apothem (A) of the first lateral surface (5) and a plurality of second holes (10) distributed around the second axis (Y) along multiple second circumferences (11). The variator (1) further comprises a transmission member (12), rotatable around a third axis (Z) thereof and provided with engagement elements (13) around the third axis (Z). Such a transmission member (12) is movable parallel to the second axis (Y) in a plurality of positions (Q) each corresponding to a first and a second circumference (7, 11). The transmission member (12) is also actuatable between a movement configuration and a shift configuration. In the movement configuration, the third axis (Z) belongs to a first lying plane (β) containing the first and second axes (X, Y) and the engagement elements (13) are engaged with the first holes (6) of a first circumference (7) and with the second holes (10) of a second circumference (11) corresponding to the first in order to transfer a rotation motion. In the shift configuration, the third axis (Z) is tilted with respect to the first lying plane (β), two adjacent engagement elements (13) are placed at two first holes (6) belonging to two first circumferences (7) that are adjacent to each other and two adjacent engagement elements (13) are placed at two second holes (10) belonging to two second circumferences (11) that are adjacent to each other.

## Description

### Field of application

The present invention concerns a speed variator and a gear change method executed by means of the aforesaid variator, according to the respective independent claims.

In more detail, the variator and the method in question are advantageously intended to be used in the production field of transport means, such as cars or bicycles.

In particular, the variator and the method in question are advantageously used to change gears without any clutch being provided.

### Prior art

In the sector of transport means, the use of traditional gearboxes which include a clutch is well known, which are complex and therefore expensive to manufacture and require the user to use the clutch to change gears.

In order to overcome the use of the clutch, speed variators are also known, in particular for bicycles such as mopeds or scooters, which comprise a first frustoconical member mechanically connected to the engine (and therefore generally referred to as the drive member, since it is the component of the variator that receives the rotational motion directly from the engine) to be able to be brought into rotation around the axis thereof and a second frustoconical member, which is mechanically connected to one or more driving wheels (and therefore generally referred to as the driven member since it receives the motion from the first frustoconical member or drive member to bring the wheels of the vehicle into rotation), has dimensions substantially equal to those of the first frustoconical member, is arranged next to the first frustoconical member and has the larger base thereof arranged adjacent to the smaller base of the first frustoconical member and the smaller base thereof arranged adjacent to the larger base of the aforesaid first frustoconical member. In such a speed variator, a transmission belt is also included which is wound around the lateral surfaces of the first and second frustoconical members and which can be actuated to translate along the parallel axes of such two frustoconical members to change the speed, continuously and without using a clutch, of the second frustoconical member mechanically connected to the wheels.

In fact, in use, when the first frustoconical member is rotated at a constant speed by the engine, the rotation speed of the second frustoconical member depends on the position of the transmission belt along the axes of the two frustoconical members. In more detail, when the transmission belt is located near the larger base of the first frustoconical member and near the smaller base of the second frustoconical member, the second frustoconical member is brought into rotation with greater angular velocity with respect to that of the first frustoconical member. When the transmission belt is instead located near the smaller base of the first frustoconical member and near the larger base of the second frustoconical member, the second frustoconical member is brought into rotation with less angular velocity with respect to that of the second frustoconical member. Finally, when the transmission belt is substantially halfway between the larger bases and the smaller bases of the two frustoconical members, the second frustoconical member is brought into rotation with an angular velocity substantially equal to that of the first frustoconical member.

The speed variator of the prior art has however proved to be not free from drawbacks, in practice.

In fact, the transmission belt is a flexible member that is easily subject to wear and tear and, therefore, must be replaced every time even short total distances are covered, for example in the order of 10,000 or 15,000 km.

Furthermore, as the transmission belt wears, it loses fragments of polymeric material which can interfere with the correct operation of other mechanical members, in addition to that of the first and second frustoconical members.

Furthermore, the means used to translate the transmission belt along the axes of the two frustoconical members in order to change the speed must be carefully designed to push it without inducing mechanical stresses that could create curvatures in the transmission belt on planes parallel to the axes of the frustoconical members themselves (which could affect the correct operation of the variator) or break the belt itself.

### Presentation of the invention

In this situation, the problem underlying the present invention is therefore that of overcoming the drawbacks manifested by the known type of solutions discussed above, by providing a speed variator and a gear change method executed by means of the aforesaid speed variator, which allow to change gears without requiring the use of a clutch.

A further object of the present invention is to provide a speed variator and a gear change method executed by means of the aforesaid speed variator, which are subject to wear to a lesser extent with respect to those of the prior art.

A further object of the present invention is to provide a speed variator and a gear change method executed by means of the aforesaid speed variator, which are simple and economical to achieve. A further object of the present invention is to provide a speed variator and a gear change method executed by means of the aforesaid speed variator, which are operatively entirely reliable.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:

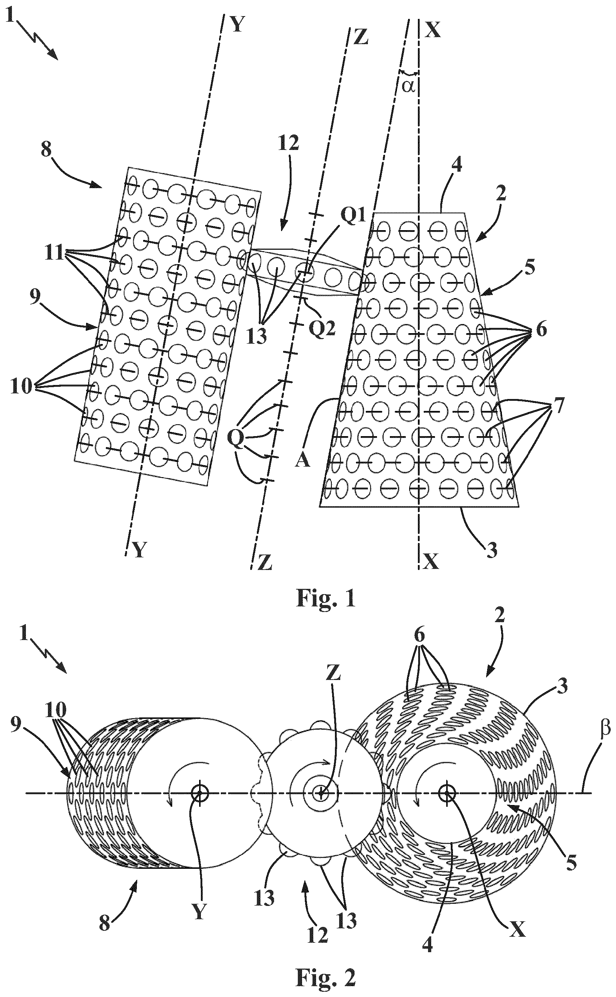

- Figure 1 shows a plan view of the speed variator which is the subject of the present invention, with a transmission member in a movement configuration and with some parts removed to better show others thereof;
- Figure 2 shows a front view of the speed variator of Figure 1;

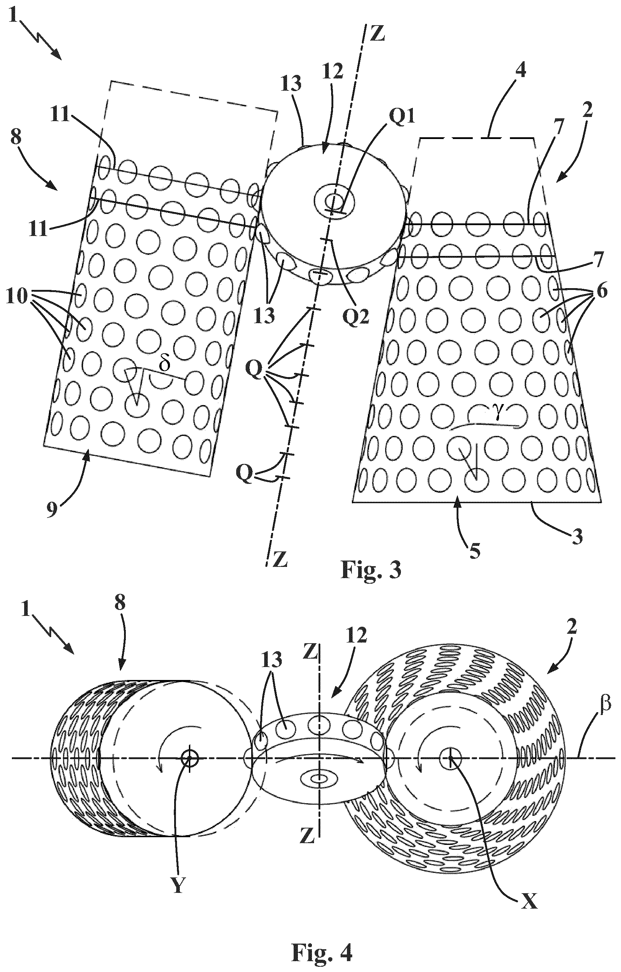

- Figure 3 shows a plan view of the speed variator which is the subject of the present invention, with the transmission member in a shift configuration, with some parts removed to better show others thereof and with a part of a drive member and of a driven member represented in a dashed line and corresponding to a sequence of gears already passed;
- Figure 4 shows a front view of the speed variator of Figure 3;

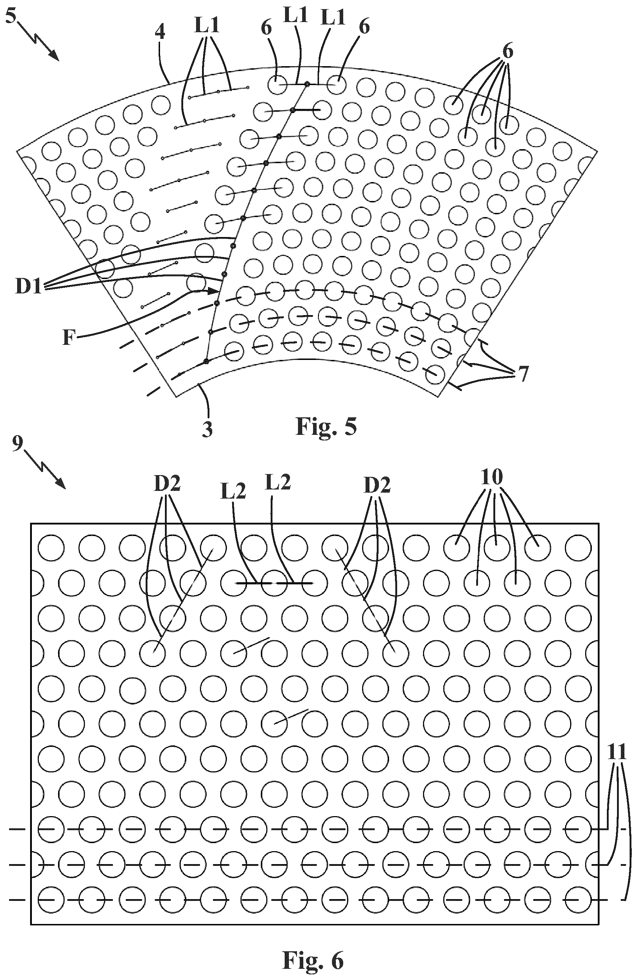

- Figure 5 shows a development on the plane of a first lateral surface of the drive member of the speed variator which is the subject of the present invention, in which a part of first holes has been replaced by the representation of the centers thereof to better show a first length, with which the first adjacent holes belonging to the same first circumference are spaced, and to better show a distance, with which the first adjacent holes belonging to a row formed by first holes each belonging to a different first circumference are spaced;
- Figure 6 shows a development on the plane of a second lateral surface of the driven member of the speed variator which is the subject of the present invention;

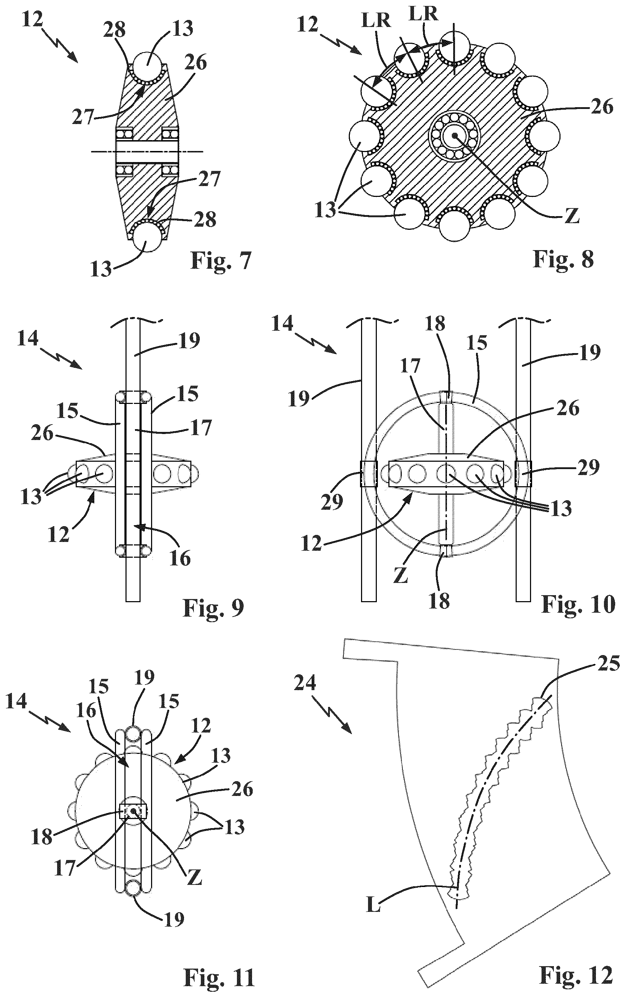

- Figure 7 shows a sectional view of the transmission member of the speed variator which is the subject of the present invention, in which the section is obtained on a plane containing a third axis of the aforesaid transmission member;
- Figure 8 shows a sectional view of the transmission member of the speed variator which is the subject of the present invention, in which the section is obtained on a plane orthogonal to the third axis;
- Figures 9 to 11 show orthogonal projections of at least part of a movement mechanism of the transmission member of the speed variator which is the subject of the present invention;
- Figure 12 shows a development on the plane of a movement mask of the movement mechanism of the transmission member of the speed variator which is the subject of the present invention;

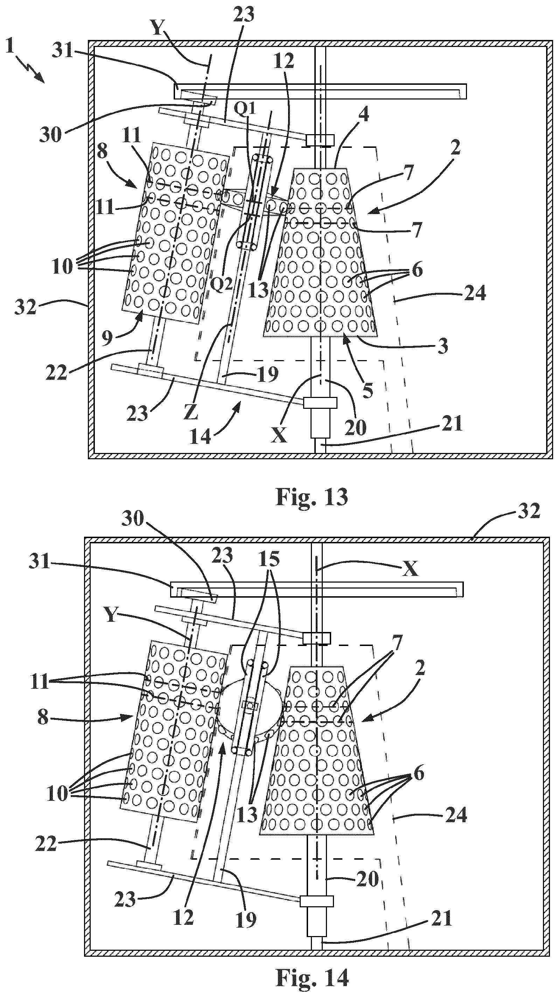

- Figure 13 shows a plan view of the speed variator which is the subject of the present invention, with the transmission member in a movement configuration and with the movement mask represented in dashed lines to better show the other parts of the aforesaid speed variator;
- Figure 14 shows a plan view of the speed variator which is the subject of the present invention, with the transmission member in a shift configuration and with the movement mask represented in dashed lines to better show the other parts of the aforesaid speed variator.

### Detailed description of a preferred embodiment

With reference to the attached drawings, a speed variator which is the subject of the present invention is indicated with 1.

In more detail, the variator 1 in question is advantageously intended to be installed on a means of transport, such as a four- or two-wheeled vehicle, and is arranged to allow gear changes without any clutch being required.

The variator 1 in question comprises a drive member 2 extending along a first axis X thereof between a larger base 3 and a smaller base 4 and having a first lateral surface 5 which is substantially frustoconical.

In particular, such a drive member 2 is so called because it is that component of the variator 1 according to the invention which is arranged to be mechanically connected to the vehicle engine to receive a rotary motion therefrom and to transfer the aforesaid rotary motion to one or more of the wheels through other components which will be described below.

The aforesaid drive member 2 is susceptible of being driven in rotation around the first axis X thereof and is provided with a plurality of first holes 6 equally angularly distributed around the first axis X along multiple first circumferences 7, which are defined by the intersection of corresponding first reference planes orthogonal to the first axis X and the first lateral surface 5. Furthermore, the variator 1 in question comprises a driven member 8, which extends along its a second axis Y thereof, tilted with respect to the first axis X by an angle α equal to that subtended by an apothem A of the first lateral surface 5 with the same first axis X, and has a second substantially cylindrical lateral surface 9 spaced from the first lateral surface 5.

More specifically, the term apothem A refers to the line extending between the larger base 3 and the smaller base 4 on the first lateral surface 5 and defined by the intersection of the aforesaid first lateral surface 5 with any plane containing the first axis X.

Such a driven member 8 is arranged to be rotated around the second axis Y thereof and is provided with a plurality of second holes 10 equally angularly distributed around the second axis Y along multiple second circumferences 11 defined by the intersection of corresponding second reference planes orthogonal to the second axis Y and the second lateral surface 9.

In particular, the driven member 8 is so called because it is that component of the variator 1 in question which is arranged to be mechanically connected to one or more of the vehicle wheels and to be brought into rotation by the drive member 2 through other components of the variator 1 itself which will be introduced here below.

The variator 1 in question further comprises a transmission member 12, which is interposed between the drive member 2 and the driven member 8, is rotatable around a third axis Z thereof and is provided with a plurality of engagement elements 13 that are equally angularly distributed around the third axis Z and are susceptible of engaging the first and second holes 6, 10.

Such a transmission member 12 is movable in translation along a direction parallel to the second axis Y in a plurality of heights Q, each corresponding to a first circumference 7 of the aforesaid multiple first circumferences 7 and a second circumference 11 of the aforesaid multiple second circumferences 11 in order to engage with the engagement elements 13 the first holes and second holes 6, 10 of the aforesaid first and second circumference 7, 11.

In more detail, the term "height" is used with the meaning of "positions" of the transmission member 12 along a direction parallel to the second Y-axis.

The transmission member 12 is also actuatable between a movement configuration and a shift configuration.

In the movement configuration, the third axis Z belongs to a first lying plane β containing the first and second axis X, Y and is parallel to the second axis Y.

Furthermore, in the movement configuration, the engagement elements 13 are engaged with the first holes 6 of the drive member 2 distributed along a first circumference 7 and with the second holes 10 of the driven member 8 distributed along a second circumference 11 corresponding to the first circumference 7 to transfer a rotational motion from the drive member 2 to the driven member 8. In the shift configuration, the third axis Z is tilted with respect to the first lying plane β and, further, two adjacent engagement elements 13 are placed at two first holes 6 belonging to two first circumferences 7 that are adjacent to each other and two adjacent engagement elements 13 are placed at two second holes 10 belonging to two second circumferences 11 that are adjacent to each other.

In more detail, when the drive member 2 rotates around the first axis X thereof and the transmission member 12 is in the movement configuration, the transmission member 12 is brought in rotation around the third axis Z thereof with a rotation direction opposite to that of the drive member 2 and with a rotation speed that depends on the height Q at which the transmission member 12 itself is located, i.e., which depends on the first circumference 7 in the first holes 6 of which the engagement elements 13 are engaged. In fact, the number of first holes 6 along each first circumference 7 increases advantageously from the first circumference 7 adjacent to the smaller base 4 to the first circumference 7 adjacent to the larger base 3 and, therefore, the transmission ratio between the drive member 2 and the transmission member 12 (i.e., in particular the ratio between the angular velocity of the drive member 2 and the angular velocity of the transmission member 12) decreases from the first circumference 7 adjacent to the smaller base 4 to the first circumference 7 adjacent to the larger base 3. Furthermore, since the driven member 8 has a second lateral surface 9 that is substantially cylindrical, the number of second holes 10 along each second circumference 11 is advantageously always the same at each second circumference 11 and, consequently, the transmission ratio between the transmission member 12 and the driven member 8 is constant at any height Q of the transmission member 12. Therefore, the transmission ratio between the drive member 2 and the driven member 8 is advantageously proportional to the transmission ratio between the drive member 2 and the transmission member 12 and, therefore, decreases from the first circumference 7 adjacent to the smaller base 4 to the first circumference 7 adjacent to the larger base 3. Furthermore, since the first engagement elements 13 of the transmission member 12 in the movement configuration engage the second holes 10 of a second circumference 11 of the driven member 8 to cause the latter to rotate around the second axis Y thereof, the aforesaid driven member 8 is advantageously brought into rotation with a rotation direction opposite that of the transmission member 12 and therefore with the same rotation direction as the drive member 2. Therefore, each height Q of the transmission member 12 (and therefore each corresponding first circumference 7) determines, in particular, a specific gear with which the driven member 8 is brought into rotation around the second axis Y thereof.

In accordance with the embodiment illustrated in the attached figures, the drive member 2 is advantageously provided with ten first holes 6 on the first circumference 7 adjacent to the smaller base 4 and with twenty first holes 6 on the first circumference 7 adjacent to the larger base 4.

Therefore, the transmission ratio between the drive member 2 and the driven member 8 with the transmission member 12 in the movement configuration at the height Q corresponding to the first circumference 7 adjacent to the smaller base 4 is preferably double the transmission ratio between the drive member 2 and the driven member 8 with the transmission member 12 in the movement configuration at the height Q corresponding to the first circumference 7 adjacent to the larger base 3.

Consequently, in accordance with the embodiment illustrated in the attached figures, for a constant rotation speed of the drive member 2, the rotation speed of the driven member 8 with the transmission member 12 in the movement configuration at the height Q corresponding to the first circumference 7 adjacent to the larger base 3 is double the rotation speed of the driven member 8 with the transmission member 12 in the movement configuration at the height Q corresponding to the first circumference 7 adjacent to the smaller base 4.

In use, in order to change gears (i.e., in particular in order to change the transmission ratio), the transmission member 12 is switched from the movement configuration to the shift configuration to tilt the third axis Z thereof with respect to the first lying plane β containing the first and second axes X, Y and is made to translate parallel to the second axis Y so that two engagement elements 13 of the transmission member 12 are arranged at two first holes 6 belonging to adjacent first circumferences 7 and that two opposite engagement elements 13 are arranged at two second holes 10 belonging to adjacent second circumferences 11 corresponding to such first circumferences 7. Thereby, following the translation parallel to the second axis Y, by switching the transmission member 12 again from the shift configuration to the movement configuration, the engagement elements 13 advantageously engage with the first holes 6 and the second holes 10 of the respective first and second circumferences 7, 11 adjacent to the first and second circumferences 7, 11 which had the first and second holes 6, 10 thereof previously engaged, consequently obtaining a gear change without the use of any clutch.

Advantageously, in order to reduce wear as much as possible and to facilitate the engagement of the first and second holes 6, 10 of different first and second circumferences 7, 11 during the switching of the transmission member 12 between the movement configuration and the shift configuration, the engagement elements 13 are rotatable bearings.

In more detail, the engagement elements 13 in the form of rotatable bearings are spherical. Preferably, the transmission member 12 comprises a main body 26 provided peripherally with a plurality of retaining seats 27 each containing a corresponding engagement element 13 in the form of a rotatable bearing.

Even more preferably, the transmission member 12 is provided with a plurality of secondary bearings 28 housed in each retaining seat 27, having smaller dimensions than those of the engagement elements 13 in the form of rotatable bearings and arranged to facilitate the rotation of the aforesaid engagement elements 13 with respect to the main body 26.

Advantageously, the engagement elements 13 of the transmission member 12 are each spaced from the adjacent engagement element 13 by an arc of circumference having a reference length LR.

In particular, the arc of circumference having reference length LR extends between the center of an engagement element 13 in the form of a rotatable bearing and the center of an adjacent engagement element 13 in the form of a rotatable bearing.

Preferably, in particular for the purpose of allowing the first engagement elements 13 to engage with the first holes 6, the aforesaid first holes 6 of each first circumference 7 are each spaced from the adjacent first hole 6 belonging to the same first circumference 7 by an arc of circumference having a first length L1 equal to the reference length LR.

In more detail, the arc of circumference having first length L1 extends between the center of a first hole 6 and the center of an adjacent first hole 6 belonging to the same first circumference 7.

Preferably, in particular for the purpose of allowing the first engagement elements 13 to engage with the second holes 10, the aforesaid second holes 10 of each second circumference 11 are each spaced from the adjacent second hole 10 belonging to the same second circumference 11 by an arc of circumference having a second length L2 equal to the reference length LR.

Advantageously, the drive member 2 comprises a shift row F of first holes 6, each of which belongs to a different first circumference 7 and is spaced from the adjacent first hole 6 belonging to the shift row F by a first distance D1 equal to the reference length LR.

In particular, the transmission member 12 is actuatable from the movement configuration to the shift configuration with an engagement element 13 thereof placed at a first hole 6 belonging to the shift row F.

In more detail, given that the first lateral surface 5 is substantially frustoconical and that the first holes 6 on each first circumference 7 are equally angularly distributed around the first axis X and are each advantageously placed at a first length L1 (equal to the reference length LR) from an adjacent first hole 6 belonging to the same first circumference 7, it is particularly complex to design and size a drive member 2 having all the first adjacent holes 6 of different first circumferences 7 placed therebetween at a first distance D1 equal to the reference length LR. Therefore, in the design phase, it is advantageous to set a shift row F formed by first holes 6 belonging to different first circumferences 7 and each placed from the adjacent one at a first distance D1 equal to the reference length LR, so as to guarantee the passage at such a shift row F from one height Q to another of the transmission member 12 without causing impacts or excessive mechanical stresses which could lead to the breakage of the variator 1 in question. Therefore, operationally, in order to be able to change the height Q of the transmission member 12 (and therefore change gears), the transmission member 12 is advantageously switched from the movement configuration to the shift configuration when it has an engagement element 13 thereof at a first hole 6 belonging to the shift row F, so that by tilting the third axis Z thereof, it brings another engagement element 13 at another first hole 6 belonging to the shift row F and to a first adjacent circumference 7. In particular, in order to change the height Q of the transmission member 12 again, it is advantageous to wait until the drive member 2 has completed a rotation around the first axis X thereof, so as to once again have an engagement element 13 of the transmission member 12 at a first hole 6 belonging to the shift row F.

Preferably, in order to take into account the rotation around the first axis X performed by the drive member 2 at the moment in which the transmission member 12 is switched from the movement configuration to the shift configuration, the line passing through the centers of two first adjacent holes 6 belonging to the shift row F forms with an apothem A of the first lateral surface 5 a first offset angle γ different from 0° (for example, the first offset angle γ is around 30°).

Advantageously, each second hole 10 is spaced from an adjacent second hole 10 belonging to a different second circumference 11 by a second distance D2 equal to the reference length LR. Thereby, it is therefore easy to switch the transmission member 12 between the movement configuration and the shift configuration without causing impacts or mechanical stresses that could damage the variator 1 in question.

In particular, since the driven member 8 has a second lateral surface 9 that is substantially cylindrical, it is possible to distribute the second holes 10 so that the adjacent second holes 10 of different second circumferences 11 are all placed at the same second distance D2 equal to the reference length LR of the engagement elements 13 on the transmission member 12.

Preferably, in order to take into account the rotation around the second axis Y performed by the driven member 8 at the moment in which the transmission member 12 is switched from the movement configuration to the shift configuration, the line passing through the centers of two adjacent second holes 10 belonging to two different second circumferences 11 forms with a line lying on the second lateral surface 9 and parallel to the second axis Y a second offset angle δ different from 0° (for example, the second offset angle δ is around 30°).

Advantageously, the variator 1 in question is provided with a movement mechanism 14 of the transmission member (12), which comprises two support rings 15 and a support pin 17.

In more detail, the support rings 15 are extended on corresponding second lying planes parallel to each other and orthogonal to the first lying plane β containing the first and second axis X, Y and define a circular guide seat 16 between them.

Furthermore, advantageously, the support pin 17 traverses the transmission member 12, rotatably supporting it around the third axis Z and terminates with two opposite ends 18 slidably inserted in the circular guide seat 16 in order to allow the transmission member 12 to switch between the movement configuration and the shift configuration, tilting the third axis Z.

Furthermore, the movement mechanism 14 comprises at least one rectilinear guide 19 parallel to the second axis Y and the support rings 15 are integral with each other and slidably associated with the rectilinear guide 19 in order to allow the transmission member 12 to translate along a direction parallel to the second axis Y between the plurality of heights Q.

In order to support the support rings 15 in a more stable manner, the movement mechanism 19 preferably comprises two rectilinear guides 19 parallel to each other and the support rings 15 are made integral with each other at two diametrically opposite points by means of two carriages 29, each of which is slidably associated with a corresponding rectilinear guide 19.

Advantageously, the variator 1 in question comprises a first support shaft 20, which is extended along the first axis X, carries the drive member 2 mounted thereon and is susceptible of being mechanically connected to a drive shaft 21 to rotate the drive member 2, and a second support shaft 22, which extends along the second axis Y and carries the driven member 8 mounted thereon.

In more detail, the first support shaft 20 can be fixed to the drive shaft 21, can be made in one piece with the aforesaid drive shaft 21 or, in accordance with an embodiment not illustrated, can be connected to the drive shaft 21 by means of a transmission device, for example a reducer. Furthermore, the movement mechanism 14 advantageously comprises at least one support flange 23 mounted on the first support shaft 20, idly rotatable with respect to the first support shaft 20 around the first axis X and carrying at least the second support shaft 22 and the at least one rectilinear guide 19 mounted thereon (preferably both rectilinear guides 19).

Preferably, the second support shaft 22 is rotatably integral with the driven member 8, is rotatably mounted on the aforesaid at least one support flange 23 around the second axis Y of the driven member 8 and ends with a first gear wheel 30, which is in particular conical.

In more detail, the first gear wheel 30 is engaged with a second gear wheel 31 mechanically connected to at least one wheel or wheel axle.

Advantageously, in order to stably support the driven member 8, two support flanges 23 are provided, mounted on the first support shaft 20, one adjacent to the larger base 3 of the drive member 2 and the other adjacent to the smaller base 4 of the aforesaid drive member 2, which can rotate freely with respect to the first support shaft 20 and which carry at least the second support shaft 22 and the at least one rectilinear guide 19 (preferably both rectilinear guides 19). In particular, one of the two support flanges 23 is drilled and traversed by the second support shaft 22, so as to be interposed between the driven member 8 and the first gear wheel 30.

The movement mechanism 14 advantageously comprises a plate-like movement mask 24 extended around at least part of the first lateral surface 5 of the drive member 2 and provided with a guide opening 25, which is extended along a curved reference line L, is traversed by the transmission member 12 and is shaped in order to actuate such a transmission member 12 between the movement configuration and the shift configuration with the transmission member 12 that translates parallel to the second axis Y.

Operationally, when the transmission member 12 is actuated to translate parallel to the second axis Y, it passes through the guide opening 25 of the movement mask 24 which is specifically shaped to tilt the transmission member 12 successively between the movement configuration and the shift configuration at each subsequent passage of the transmission member 12 from one height Q to another adjacent height Q to change gears.

In particular, the shape of the guide opening 25 is obtained during the design phase by sequentially superimposing the section (obtained at the point where it traverses the movement mask 14) of the transmission member 12 in the movement configuration and in the shift configuration for each height Q at which the transmission member 12 can be positioned and staggering such sections in sequence along the curved reference line L (if the reference line L were not curved, the guide opening 25 might not be able to effectively tilt the transmission member 12 between the movement configuration and the shift configuration as the sequential sections could be superimposed on each other to such an extent that they would be difficult to distinguish).

Since the reference line L along which the guide opening 25 extends is advantageously curved, during the translation of the transmission member 12 between the various dimensions Q, the at least one support flange 23 (and preferably both support flanges 23) rotates around the first axis X (being idly mounted around the first support shaft 20 extending along the first axis X itself and carrying the transmission member 12 mounted therein translatable parallel to the second axis Y along the guide opening 25 extending on a corresponding reference line L), with the consequence that the driven member 8 also rotates around the first axis X.

Therefore, the first lying plane β containing the first axis X of the drive member 2 and the second axis Y of the driven member 8 advantageously rotates around the same first axis X with the transmission member 12 translating between the various heights Q (even if the transmission member 12, translating between the various heights Q, follows a path that extends around the first axis X, it in any case translates parallel to the second axis Y on the first lying plane β, given that the second axis Y in turn rotates around the first axis X, modifying the orientation of the same first lying plane β).

Preferably, the variator 1 according to the invention comprises a containment box 32, which contains therein at least the drive member 2, the transmission member 12 and the driven member 8.

In more detail, the containment box 32 is provided with at least one opening to allow the entry of the drive shaft 21 and with at least one opening to allow the entry of a shaft arranged to mechanically connect the second gear wheel 31 to at least one wheel or to a wheel axle.

The present invention further relates to a gear change method executed by means of a speed variator 1 of the type described above.

The aforesaid method provides for a first movement step, in which the drive member 2 rotates around the first axis X, rotating the driven member 8 at a first rotation speed around the second axis Y, due to the transmission member 12 in the movement configuration, which is placed at a first height Q1 of the plurality of heights Q corresponding to a first and second circumference 6, 10 and has the engagement elements 13 thereof engaged with the first and second holes 6 respectively belonging to the first and second circumference 7, 11 corresponding to the first height Q1.

More specifically, for the purposes of clarity of the invention, the first height Q1 must not necessarily be understood as the one among the plurality of heights Q adjacent to the larger base 3 or the smaller base 4 of the drive member 2, but rather the one among the plurality of heights Q starting from which a gear change is to be carried out (and therefore the first height Q1 may be an intermediate height Q between the one adjacent to the larger base 3 and the one adjacent to the smaller base 4, as illustrated for example in the attached figures).

The method further provides for a shift step, which comprises a first and a second sub-step.

In the first sub-step of the shift step, the transmission member 12 is actuated from the movement configuration to the shift configuration and translated parallel to the second axis Y starting from the first height Q1 such that, in at least one instant of such a first sub-step, the aforesaid transmission member 12 has:
- an engagement element 13 placed at a first hole 6 belonging to the first circumference 7 corresponding to the first height Q1,
- an engagement element 13 placed at a first hole 6 belonging to a first circumference 7 corresponding to a different second height Q2 of the plurality of heights Q and adjacent to the first circumference 7 corresponding to the first height Q1,
- an engagement element 13 placed at a second hole 10 belonging to the second circumference 11 corresponding to the first height Q1, and
- an engagement element 13 placed at a second hole 10 belonging to a second circumference 11 corresponding to the aforesaid second height Q2 and adjacent to the second circumference 11 corresponding to the first height Q1.

Thereby, in the first sub-step, the transmission member 12 has two engagement elements 13 placed at the first height Q1 and two engagement elements 13 placed at the second height Q2, so that it can pass from the first height Q1 to the second height Q2 gradually.

Moreover, in the second sub-step of the shift step, the transmission member 12 is actuated from the shift configuration to the movement configuration such that the engagement elements 13 disengage the first and second holes 6, 10 respectively belonging to the first and second circumference 7, 11 corresponding to the first height Q1 and engage the first and second holes 6, 10 respectively belonging to the first and second circumference 7, 11 corresponding to the second height Q2.

The method in question further comprises a second movement step, in which the drive member 2 rotates around the first axis X, rotating the driven member 8 at a second rotation speed different from the first rotation speed around the second axis Y, due to the transmission member 12 in the movement configuration, which is placed at the second height Q2 and has the engagement elements 13 thereof engaged with the first and second holes 6 respectively belonging to the first and second circumference 7, 11 corresponding to the second height Q2.

As stated above, the drive member 2 advantageously comprises a shift row F of first holes 6, each of which belongs to a different first circumference 7 and is spaced from the adjacent first hole 6 belonging to the shift row F by a first distance D1 equal to the reference length LR, and furthermore the transmission member 12 is preferably actuatable from the movement configuration to the shift configuration with the engagement element 13 thereof placed at a first hole 6 belonging to the shift row F.

Advantageously, therefore, in the first sub-step of the shift step, the transmission member 12 is actuated from the movement configuration to the shift configuration and translated parallel to the second axis Y starting from the first height Q1 such that, in at least one instant of the aforesaid first sub-step, the transmission member 12 has:
- an engagement element 13 placed at a first hole 6 belonging to the shift row F and to the first circumference 7 corresponding to the first height Q1,
- an engagement element placed at a first hole 6 belonging to the shift row F and to a first circumference 7 corresponding to a different second height Q2 of the plurality of heights Q and adjacent to the first circumference 7 corresponding to the first height Q1,
- an engagement element 13 placed at a second hole 10 belonging to the second circumference 11 corresponding to the first height Q1, and
- an engagement element 13 placed at a second hole 10 belonging to a second circumference 11 corresponding to the second height Q2 and adjacent to the second circumference 11 corresponding to the first height Q1.

This advantageously allows a gear change to be executed without any impacts occurring between the components of the variator 1 or excessive mechanical stresses, given that the first holes 6 along the shift row F are spaced apart from each other in accordance with the distance between two adjacent engagement elements 13 of the transmission member 12.

Therefore, the invention thus conceived achieves the pre-set objects.

## Claims

1. Speed variator (1), which comprises:
- a drive member (2), extended along a first axis (X) thereof between a larger base (3) and a smaller base (4), having a first lateral surface (5) substantially frustoconical, susceptible of being driven in rotation around said first axis (X) and provided with a plurality of first holes (6) equally angularly distributed around said first axis (X) along multiple first circumferences (7), which are defined by the intersection of corresponding first reference planes orthogonal to said first axis (X) with said first lateral surface (5);
- a driven member (8), extended along a second axis (Y) thereof that is tilted with respect to said first axis (X) by an angle (α) equal to that subtended by an apothem (A) of said first lateral surface (5) with said first axis (X); said driven member (8) having a second lateral surface (9) substantially cylindrical and spaced from said first lateral surface (5), the driven member (8) being arranged for being rotated around said second axis (Y) thereof and being provided with a plurality of second holes (10) that are equally angularly distributed around said second axis (Y) along multiple second circumferences (11) defined by the intersection of corresponding second reference planes orthogonal to said second axis (Y) with said second lateral surface (9);
- a transmission member (12), which is interposed between said drive member (2) and said driven member (8), is rotatable around a third axis (Z) thereof and is provided with a plurality of engagement elements (13) that are equally angularly distributed around said third axis (Z) and are susceptible of engaging said first holes (6) and said second holes (10);
said transmission member (12) being movable in translation along a direction parallel to said second axis (Y) in a plurality of heights (Q), each corresponding to a first circumference (7) of said multiple first circumferences (7) and a second circumference (11) of said multiple second circumferences (11) in order to engage with said engagement elements (13) the first holes (6) of said first circumference (7) and the second holes (10) of said second circumference (11);
said transmission member (12) being actuatable between:
- a movement configuration, in which said third axis (Z) belongs to a first lying plane (β) containing said first axis (x) and said second axis (Y) and is parallel to said second axis (Y) and said engagement elements (13) are engaged with the first holes (6) of said drive member (2) distributed along one said first circumference (7) and with the second holes (10) of said driven member (8) distributed along one said second circumference (11) corresponding to said first circumference (7) in order to transfer a rotation motion from said drive member (2) to said driven member (8); and
- a shift configuration, in which said third axis (Z) is tilted with respect to said first lying plane (β), two adjacent engagement elements (13) are placed at two first holes (6) belonging to two first circumferences (7) that are adjacent to each other and two adjacent engagement elements (13) are placed at two second holes (10) belonging to two second circumferences (11) that are adjacent to each other.

2. Variator (1) according to claim 1, **characterized in that** said engagement elements (13) are rotatable bearings.

3. Variator (1) according to claim 1 or 2, **characterized in that** the engagement elements (13) of said transmission member (12) are each spaced from the adjacent said engagement element (13) by an arc of circumference having a reference length (LR);
the first holes (6) of each first circumference (7) each being spaced from the adjacent first hole (6) belonging to the same said first circumference (7) of an arc of circumference having a first length (L1) equal to said reference length (LR);
the second holes (10) of each second circumference (11) each being spaced from the adjacent second hole (10) belonging to the same said second circumference (11) of an arc of circumference having a second length (L2) equal said reference length (LR).

4. Variator (1) according to claim 3, **characterized in that** said drive member (2) comprises a shift row (F) of first holes (6), each of which belongs to a different said first circumference (7) and is spaced from the adjacent first hole (6) belonging to said shift row (F) by a first distance (D1) equal to said reference length (LR);
said transmission member (12) being actuatable from said movement configuration to said shift configuration with one said engagement element (13) thereof placed at a first hole (6) belonging to said shift row (F).

5. Variator (1) according to any one of the preceding claims, **characterized in that** it comprises a movement mechanism (14) of said transmission member (12), which comprises:
- two support rings (15), which are extended on corresponding second lying planes parallel to each other and orthogonal to said first lying plane (β) containing said first axis (X) and said second axis (Y) and define a circular guide seat (16) between them;
- a support pin (17), which traverses said transmission member (12), rotatably supporting it around said third axis (Z) and terminates with two opposite ends (18) slidably inserted in said circular guide seat (16) in order to allow said transmission member (12) to switch between said movement configuration and said shift configuration, tilting said third axis (Z).

6. Variator (1) according to claim 5, **characterized in that** said movement mechanism (14) comprises at least one rectilinear guide (19) parallel to said second axis (Y); said support rings (15) being integral with each other and slidably associated with said rectilinear guide (19) in order to allow said transmission member (12) to translate along a direction parallel to said second axis (Y) between said plurality of heights (Q).

7. Variator (1) according to claim 6, **characterized in that** it comprises:
- a first support shaft (20), which is extended along said first axis (X), carries said drive member (2) mounted thereon and is susceptible of being mechanically connected to a drive shaft (21) in order to rotate said drive member (2);
- a second support shaft (22), which is extended along said second axis (Y) and carries said driven member (8) mounted thereon;
said movement mechanism (14) comprising at least one support flange (23) mounted on said first support shaft (20), idly rotatable with respect to said first support shaft (20) around said first axis (X) and carrying at least said second support shaft (22) and said rectilinear guide (19) mounted thereon.

8. Variator (1) according to claim 7, **characterized in that** said movement mechanism (14) comprises a plate-like movement mask (24) extended around at least part of the first lateral surface (5) of said drive member (2) and provided with a guide opening (25), which is extended along a curved reference line (L), is traversed by said transmission member (12) and is shaped in order to actuate said transmission member (12) between said movement configuration and said shift configuration with said transmission member (12) that translates parallel to said second axis (Y).

9. Gear change method executed by means of the speed variator (1) according to any one of the preceding claims, which provides for:
- a first movement step, in which said drive member (2) rotates around said first axis (X), rotating said driven member (8) at a first rotation speed around said second axis (Y), due to said transmission member (12) in said movement configuration, which is placed at a first height (Q1) of said plurality of heights (Q) corresponding to one said first circumference (6) and to one said second circumference (10) thereof and has said engagement elements (13) thereof engaged with the first holes (6) and with the second holes (10) respectively belonging to said first circumference (7) and to said second circumference (11) corresponding to said first height (Q1);
- a shift step, which comprises:
- a first sub-step, in which said transmission member (12) is actuated from the movement configuration to the shift configuration and translated parallel to said second axis (Y) starting from said first height (Q1) such that, in at least one instant of said first sub-step, said transmission member (12) has:
• an engagement element (13) placed at a first hole (6) belonging to said first circumference (7) corresponding to said first height (Q1);
• an engagement element (13) placed at a first hole (6) belonging to a first circumference (7) corresponding to a different second height (Q2) of said plurality of heights (Q) and adjacent to said first circumference (7) corresponding to said first height (Q1);
• an engagement element (13) placed at a second hole (10) belonging to said second circumference (11) corresponding to said first height (Q1);
• an engagement element (13) placed at a second hole (10) belonging to a second circumference (11) corresponding to said second height (Q2) and adjacent to said second circumference (11) corresponding to said first height (Q1);
- a second sub-step, in which said transmission member (12) is actuated from the shift configuration to the movement configuration such that said engagement elements (13) disengage the first holes (6) and the second holes (10) respectively belonging to said first circumference (7) and to said second circumference (11) corresponding to said first height (Q1) and engage the first holes (6) and the second holes (10) respectively belonging to said first circumference (7) and to said second circumference (11) corresponding to said second height (Q2);
- a second movement step, in which said drive member (2) rotates around said first axis (X), rotating said driven member (8) at a second rotation speed different from said first rotation speed around said second axis (Y), due to said transmission member (12) in said movement configuration, which is placed at said second height (Q2) and has said engagement elements (13) thereof engaged with the first holes (6) and with the second holes (10) respectively belonging to said first circumference (7) and to said second circumference (11) corresponding to said second height (Q2).

10. Method according to claim 9 executed by means of the speed variator (1) according to claim 4 **characterized in that**, in the first sub-step of said shift step, said transmission member (12) is actuated from the movement configuration to the shift configuration and translated parallel to said second axis (Y) starting from said first height (Q1) such that, in at least one instant of said first sub-step, said transmission member (12) has:
- an engagement element (13) placed at a first hole (6) belonging to said shift row (F) and to said first circumference (7) corresponding to said first height (Q1);
- an engagement element placed at a first hole (6) belonging to said shift row (F) and to a first circumference (7) corresponding to a different second height (Q2) of said plurality of heights (Q) and adjacent to said first circumference (7) corresponding to said first height (Q1);
- an engagement element (13) placed at a second hole (10) belonging to said second circumference (11) corresponding to said first height (Q1);
- an engagement element (13) placed at a second hole (10) belonging to a second circumference (11) corresponding to said second height (Q2) and adjacent to said second circumference (11) corresponding to said first height (Q1).
